# EUROPÄISCHE PATENTSCHRIFT

(11) **EP 1 152 816 B1**
(45) Veröffentlichungstag und Bekanntmachung des Hinweises auf die Patenterteilung: **24.09.2003**
(21) Anmeldenummer: 00902547.9
(22) Anmeldetag: 10.01.2000
(51) Int. Cl.: B01D 53/86, B01D 53/94, F01N 9/00, F01N 3/20

(54) **VERFAHREN ZUR KATALYTISCHEN UMSETZUNG VON IM ABGAS EINES VERBRENNUNGSMOTORS ENTHALTENEN STICKOXIDEN**
METHOD FOR THE CATALYTIC CONVERSION OF NITROGEN OXIDES CONTAINED IN THE EXHAUST GAS OF AN INTERNAL COMBUSTION ENGINE
PROCEDE DE CONVERSION CATALYTIQUE D'OXYDES D'AZOTE CONTENUS DANS LES GAZ D'ECHAPPEMENT D'UN MOTEUR A COMBUSTION INTERNE

(30) Priorität: 19.01.1999 DE 19901915
(43) Veröffentlichungstag der Anmeldung: 14.11.2001
(73) Patentinhaber: SIEMENS AKTIENGESELLSCHAFT, 80333 München (DE)
(72) Erfinder: DÖLLING, Winfried, D-96369 Weissenbrunn (DE); HOFMANN, Lothar, D-96264 Altenkunstadt (DE)
(86) Internationale Anmeldenummer: DE0000057
(87) Internationale Veröffentlichungsnummer: WO00043107

(56) Entgegenhaltungen:
- WO-A-96/04980
- DE-A- 3 337 793
- DE-C- 4 217 552

## Beschreibung

Die Erfindung bezieht sich auf ein Verfahren zur katalytischen Umsetzung von im Abgas eines Verbrennungsmotors enthaltenen Stickoxiden, bei dem ein Reduktionsmittel in Abgasströmungsrichtung vor einem Denitrierungskatalysator und in Abhängigkeit von einer Stickoxidkonzentration dosiert dem Abgas zugegeben wird.

Bei der Selektiven Katalytischen Reduktion (SCR) von Stickoxiden muß einem die Stickoxide enthaltenen Abgas ein Reduktionsmittel, meist Ammoniak oder eine Ammoniak freisetzende Substanz, z.B. eine wäßrige Harnstofflösung, zugegeben werden. Das Reduktionsmittel wird zusammen mit den Stickoxiden an einem sogenannten SCR-Katalysator, der meist auf der Basis von Titanoxid mit Zusätzen von Metalloxiden, wie z.B. Vanadium, Molybdän und/oder Wolframoxid, besteht, zu Umweltunbedenklichem Stickstoff, Sauerstoff und Wasser umgesetzt.

Bei einer instationären Betriebsweise des Abgaserzeugers (Motor, Feuerung), wie sie vor allem bei Fahrzeugmotoren auftritt, variieren die Stickoxidkonzentrationen, der Abgasmassenstrom und die Abgastemperatur in weiten Bereichen. Diese Tatsache stellt eine erhebliche Anforderung an die Dosierstrategie und die Dosiergenauigkeit für das in das Abgas eingebrachte Reduktionsmittel dar.

Bei den meisten derzeit bekannten Verfahren zur Dosierung des Reduktionsmittels wird das Reduktionsmittel proportional zum Stickoxidmengenstrom in das Abgas eingebracht. Dabei muß der dem Abgas zugeführte Reduktionsmittelstrom in Relation zur Stickoxidkonzentration deutlich unterstöchiometrisch gewählt werden, um einen Durchbruch des Reduktionsmittels, insbesondere einen Ammoniakdurchbruch, sicher zu vermeiden. Damit wird jedoch die katalytische Aktivität des Katalysators in nachteiliger Weise nicht vollständig ausgenutzt, so daß die grundsätzlich mit dem Katalysator erreichbaren höheren Umsatzraten aufgrund dieser Dosierungsstrategie nicht erreicht werden können.

Aus der Deutschen Offenlegungsschrift DE 37 21 572 A1 ist es bekannt, zur Dosierung des Reduktionsmittels die Leistung und Drehzahl des Motors heranzuziehen.

Aus der EP 0 555 746 A1 ist es zudem bekannt, bei Unterschreiten eines vorgegebenen Grenzwerts der Abgastemperatur die Zudosierung von Reduktionsmittel vollständig zu unterbrechen und erst nach Wiedererreichen des Temperaturgrenzwerts die Dosierung in Abhängigkeit von der Last und der Drehzahl des Verbrennungsmotors wieder aufzunehmen.

Des weiteren ist aus der EP 0 515 857 A1 ein Verfahren bekannt, bei dem das Reduktionsmittel pulsweise überstöchiometrisch zudosiert wird und der Katalysator in den Zeitintervallen zwischen zwei Pulsen "leer" gefahren wird. Bei diesem Verfahren wird die getaktete überstöchiometrische Reduktionsmittelzugabe erst dann wieder unterbrochen, wenn an einer bestimmten Stelle im Katalysatorbett eine hohe NH3 Konzentration, die als Schwellenwert festgelegt ist, in der Gasphase erreicht worden ist.

Aus der EP 362 483 A1 ist ein pulsweitenmoduliertes, diskontinuierliches Dosierverfahren bekannt, bei dem die Pulsbreite in Abhängigkeit vom Abgasmassenstrom und der Stickoxidkonzentration eingestellt wird.

Auch die vier letztgenannten Verfahren sind mit dem oben genannten Nachteil behaftet.

Aus der WO 96/04980 ist darüber hinaus ein Verfahren bekannt, bei dem das Reduktionsmittel nur während der Startphase des Verbrennungsmotors und beim Betrieb mit sinkender und gegebenenfalls nahezu konstanter Abgastemperatur unter Berücksichtigung der temperaturabhängigen Speicherkapazität des Katalysators überstöchiometrisch in Bezug zur Stickoxidkonzentration zudosiert wird. Ansonsten wird das Reduktionsmittel unterstöchiometrisch zudosiert.

Auch mit diesem Verfahren läßt sich die grundsätzlich mit dem Katalysator erreichbare höhere Umsatzrate nicht in vollem Umfang erreichen.

Der Erfindung liegt daher die Aufgabe zugrunde, ein Verfahren zur katalytischen Umsetzung von im Abgas eines Verbrennungsmotors enthaltenen Stickoxiden anzugeben, mit dem die katalytische Aktivität des Katalysators besser ausgenutzt wird.

Die Erfindung wird in seinem weitesten Umfang durch das Verfahren nach Anspruch 1 beschrieben.

Die Aufgabe wird erfindungsgemäß in Bezug auf das eingangs genannte Verfahren dadurch gelöst, daß
a) ein die Dosiergenauigkeit beeinflußender Betriebsparameter des Verbrennungsmotors gemessen wird, wobei die Dosierung bei Unter- und/oder Überschreiten eines Grenzwerts des Betriebsparameters nicht mehr oder nur noch eingeschränkt möglich ist,
b) bei Unter- oder Überschreiten dieses Grenzwerts und/oder eines Grenzwerts einer aus dem Betriebsparameter abgeleiteten Größe das Reduktionsmittel überstöchiometrisch in Bezug zur Stickoxidkonzentration zudosiert wird,
c) bevor die Zugabe von Reduktionsmittel beendet oder unterstöchiometrisch fortgesetzt wird.

Das Verfahren nutzt das Reduktionsmittelspeichervermögen des Katalysators aus. Erkennt eine nach dem Verfahren arbeitende SCR-Steuerung den Beginn eines für die Reduktionsmitteldosierung ungünstigen Betriebszustand des Verbrennungsmotors, so wird die Dosiermenge beispielsweise kurzzeitig erhöht und auf diese Weise in den Katalysator Reduktionsmittel eingespeichert, das dann während des für die Dosierung ungünstigen Betriebszustands für den Stickoxidreduktionsprozeß zur Verfügung steht (Ausspeicherung).

Dadurch wird eine höhere mittlere Stickoxidkonvertierung erreicht, insbesondere bei wechselnden Betriebsbedingungen des Verbrennungsmotors.

Desweiteren wird die aus dem Betriebsparameter abgeleitete Größe durch Differenzieren des Betriebsparameters nach der Zeit oder durch Bildung der Differenz zeitlich beabstandeter Meßwerte des Betriebsparameters abgeleitet. Das derartig arbeitendes Verfahren kann besonders schnell und frühzeitig einen für die Reduktionsmitteldosierung ungünstigen Betriebszustand erkennen.

Beispielsweise wird bei Unter- oder Überschreiten des jeweiligen Grenzwerts eine konstante Reduktionsmittelmenge zudosiert.

Vorzugsweise wird die überstöchiometrisch zudosierte Reduktionsmittelmenge in Abhängigkeit von der durch Differenzieren bzw. der durch Differenzbildung aus dem Betriebsparameter abgeleiteten Größe eingestellt. Beispielsweise wird eine entsprechende Dosierintervallbreite danach bemessen.

Nach einer anderen bevorzugten Ausgestaltung des Verfahrens wird die überstöchiometrisch zudosierte Reduktionsmittelmenge abhängig davon eingestellt, wie weit der Grenzwert des Betriebsparameters bzw. der Grenzwert der von diesem abgeleiteten Größe über- oder unterschritten ist.

Bevorzugt wird weiterhin die überstöchiometrisch zudosierte Reduktionsmittelmenge in Abhängigkeit von der, insbesondere temperaturabhängigen, Speicherkapazität des Denitrierungskatalysators eingestellt.

Nach einer anderen bevorzugten Weiterbildung des Verfahrens wird der Wert der überstöchiometrisch zudosierten Reduktionsmittelmenge abgespeichert. Beispielsweise wird hierzu ein elektronisches Speichermedium verwendet.

Der abgespeicherte Wert wird dann im weiteren Verlauf der Steuerung der Reduktionsmitteldosierung berücksichtigt. Dies ist insbesondere dann wichtig, falls kurz nach der überstöchiometrischen Dosierung wider Erwarten doch keine längere Phase mit ungünstigen Dosierbedingungen auftreten sollte und stattdessen sofort wieder gute Dosierbedingungen vorliegen. In dieser Situation kann nämlich mit der beschriebenen bevorzugten Vorgehensweise ein Überfüllen des reduktionsmittelspeichernden Katalysators und ein Reduktionsmittelschlupf vermieden werden.

Bevorzugt ist der Betriebsparameter eine Abgastemperatur, ein Abgasmassenstrom, eine Last des Verbrennungsmotors oder eine Drehzahl des Verbrennungsmotors.

Falls der Betriebsparameter die Abgastemperatur ist, ist es besonders vorteilhaft, bei Unter- (oder Über-)schreiten eines Grenzwerts einer durch Bildung eines Differentialquotienten aus der Abgastemperatur abgeleiteten Größe die überstöchiometrische Zudosierung auszulösen. Temperatursensoren sind nämlich oftmals sehr träge und würden das Feststellen eines Unterschreitens eines Grenzwerts für die Abgastemperatur erst zu einem späten Zeitpunkt verläßlich gestatten. Demgegenüber wird bei Differenzieren des Temperaturverlaufs quasi "vorausgedacht" und ein ungünstiger Betriebszustand sehr frühzeitig erkannt.

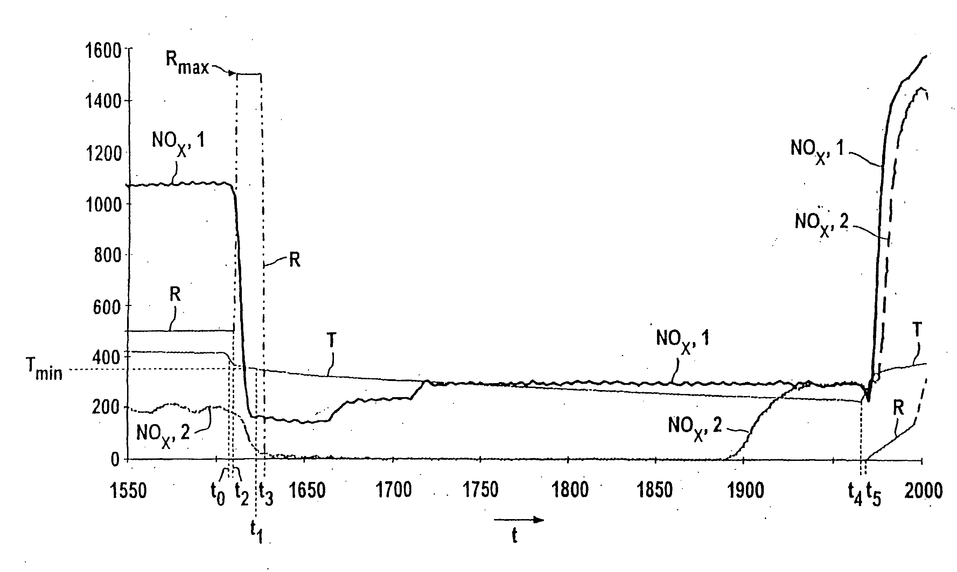

In der Zeichnung ist ein Ausführungsbeispiel des Verfahrens nach der Erfindung näher erläutert.

In der Zeichnung sind verschiedene Kurvenverläufe über der Zeit t (in Sekunden) aufgetragen. Mit T ist der Verlauf einer vor einem (nicht dargestellten) Denitrierungskatalysator gemessenen Abgastemperatur bezeichnet. Bei einem ersten Zeitpunkt t₁ sinkt die Abgastemperatur T unter einen Grenzwert Tₘᵢₙ, unterhalb dessen ein Zudosieren nicht mehr verläßlich möglich ist. Zum ersten Zeitpunkt t₁ könnte z.B. eine überstöchiometrische Zudosierung ausgelöst werden, die dann zeitversetzt einsetzen würde.

Bei dem in der Zeichnung dargestellten Ausführungsbeispiel wird dagegen ein bereits zu einem früheren Zeitpunkt t₀ durch Differenzquotientenbildung des Temperaturverlaufs festgestelltes Unterschreiten der Steigung (d.h. hier ein absolutes Überschreiten) zum Auslösen der überstöchiometrischen Zudosierung benutzt. Anstelle eines Grenzwerts Tₘᵢₙ für die Abgastemperatur ist dabei ein Grenzwert für die Steigung des Abgastemperaturverlaufs T festgelegt.

Nach dem Verfahren gemäß der Erfindung wird dann das Reduktionsmittel R mit einem überstöchiometrischen Maximalwert Rₘₐₓ zudosiert. Im dargestellten Beispiel setzt die Zudosierung mit geringem Zeitverzug zu einem späteren zweiten Zeitpunkt t₂ ein.

Zu einem etwa 10 Sekunden späteren dritten Zeitpunkt t₃ wird die Zudösierung von Reduktionsmittel R beendet. Die Breite des Intervalls zwischen dem zweiten Zeitpunkt t₂ und dem dritten Zeitpunkt t₃ (überstöchiometrisches Dosierintervall) und/oder der Maximalwert Rₘₐₓ werden in Abhängigkeit von der Katalysatortemperatur, die ein Maß für die Speicherkapazität des Denitrierungskatalysators darstellt, eingestellt.

Mit Noₓ,1 ist in dem Diagramm die Stickoxidkonzentration vor dem Katalysator und mit Noₓ, 2 die Stickoxidkonzentration nach dem Katalysator bezeichnet.

Die im überstöchiometrischen Dosierintervall zudosierte Reduktionsmittelmenge, die im wesentlichen der Fläche unter der mit R bezeichneten Kurve zwischen dem zweiten Zeitpunkt t₂ und dem dritten Zeitpunkt t₃ proportional ist, ist im Katalysator gespeichert und wirkt in der Zeit nach dem dritten Zeitpunkt t₃. Auf diese Weise findet auch in dem Zeitintervall zwischen dem dritten Zeitpunkt t₃ und einem späteren vierten Zeitpunkt t₄ ein Stickoxidabbau statt, obwohl aufgrund des Sinkens der Abgastemperatur T unter den Grenzwert Tₘᵢₙ eine Zudosierung in diesem Zeitintervall nicht möglich war.

Zum vierten Zeitpunkt t₄ ist die Steigung des Abgastemperaturverlaufs T wieder besonders groß und es wird die Reduktionsmitteldosierung wieder aufgenommen, die zu einem zeitlich verzögerten fünften Zeitpunkt t₅ einsetzt.

## Patentansprüche

1. Verfahren zur katalytischen Umsetzung von im Abgas eines Verbrennungsmotors enthaltenen Stickoxiden, bei dem ein Reduktionsmittel (R) in Abgasströmungsrichtung vor einem Denitrierungskatalysator und in Abhängigkeit von einer Stickoxidkonzentration dosiert dem Abgas zugegeben wird, wobei
a) ein die Dosierung beeinflussender Betriebsparameter (T) des Verbrennungsmotors gemessen wird, wobei
- einer aus dem Betriebsparameter (T) abgeleiteten Größe ein Grenzwert (Tₘᵢₙ) zugeordnet ist,
- bei dessen Unter- oder Überschreiten sich ein für die Dosierung ungünstiger Betriebszustand des Verbrennungsmotors einstellt,
b) beim Unter- oder Überschreiten des Grenzwerts (Tₘᵢₙ) die Dosiermenge des Reduktionsmittels (R) voreingestellt erhöht wird, und
c) zu einem nachfolgenden Zeitpunkt (t₅) die Erhöhung der Dosiermenge beendet wird,
- die Beendigung der Erhöhung der Dosiermenge während des ungünstigen Betriebszustandes erfolgt und
**dadurch gekennzeichnet, dass**
- die aus dem Betriebsparameter (T) abgeleitete Größe durch Differenzieren des Betriebsparameters (T) nach der Zeit oder durch Bildung der Differenz zeitlich beabstandeter Messwerte des Betriebsparameters (T) abgeleitet wird.

2. Verfahren nach Anspruch 1,
**dadurch gekennzeichnet, dass** die Dosiermenge kurzzeitig, insbesondere für etwa 10 Sekunden, erhöht wird.

3. Verfahren nach Anspruch 1 oder 2,
**dadurch gekennzeichnet, dass** die Dosiermenge voreingestellt auf eine überstöchiometrische Dosiermenge (Rₘₐₓ) erhöht wird.

4. Verfahren nach Anspruch 3,
**dadurch gekennzeichnet, dass** die überstöchiometrisch zudosierte Reduktionsmittelmenge (Rₘₐₓ) abhängig davon eingestellt wird, wie weit der Grenzwert (Tₘᵢₙ) der aus dem Betriebsparameter (T) abgeleiteten Größe überoder unterschritten ist.

5. Verfahren nach Anspruch 3 oder 4,
**dadurch gekennzeichnet, dass** die überstöchiometrisch zudosierte Reduktionsmittelmenge (Rₘₐₓ) in Abhängigkeit von der, insbesondere temperaturabhängigen, Speicherkapazität des Denitrierungskatalysators eingestellt wird.

6. Verfahren nach einem der Ansprüche 3 bis 5,
**dadurch gekennzeichnet, dass** ein der überstöchiometrisch zudosierten Reduktionsmittelmenge (Rₘₐₓ) zugeordneter Wert abgespeichert wird.

7. Verfahren nach Anspruch 1,
**dadurch gekennzeichnet, dass** der Betriebsparameter eine Abgastemperatur (T) umfasst.

8. Verfahren nach einem der Ansprüche 1 oder 7,
**dadurch gekennzeichnet, dass** der Betriebsparameter einen Abgasmassenstrom umfasst.

9. Verfahren nach einem der Ansprüche 1, 7 oder 8,
**dadurch gekennzeichnet, dass** der Betriebsparameter eine Last des Verbrennungsmotors umfasst.

10. Verfahren nach einem der Ansprüche 1, 7, 8 oder 9,
**dadurch gekennzeichnet, dass** der Betriebsparameter eine Drehzahl des Verbrennungsmotors umfasst.

## Claims

1. A process for the catalytic conversion of nitrogen oxides in the exhaust gas of an internal combustion engine, in which a reducing agent (R) is added to the exhaust gas in metered manner upstream, as seen in the direction of flow of the exhaust gas, of a denitration catalyst and in dependence on a nitrogen oxide concentration, in which
a) an operating parameter (T) of the internal combustion engine that affects the metering is measured, with
- a limit value (Tₘᵢₙ) being assigned to a variable derived from the operating parameter (T),
- and when this limit value (Tₘᵢₙ) is exceeded or not reached an operating condition of the internal combustion engine which is unfavourable to metering is established,
b) when the limit value (Tₘᵢₙ) is exceeded or not reached the metered quantity of the reducing agent (R) is increased in pre-established manner, and
c) at a subsequent point in time (t₅) the increase in the metered quantity is brought to an end,
- the increase in the metered quantity is brought to an end while the unfavourable operating condition is in effect, and
**characterised in that**
- the variable derived from the operating parameter (T) is derived by differentiation of the operating parameter (T) with respect to time or by forming the difference between measured values of the operating parameter (T) which are separated in time.

2. A process according to Claim 1, **characterised in that** the metered quantity is increased briefly, in particular for approximately 10 seconds.

3. A process according to Claim 1 or 2, **characterised in that** the metered quantity is pre-established to a hyperstoichiometric metered quantity (Rₘₐₓ).

4. A process according to Claim 3, **characterised in that** the quantity of reducing agent metered in as a hyperstoichiometric quantity (Rₘₐₓ) is established in dependence on the extent to which the value has exceed or fallen below the limit value (Tₘᵢₙ) of the variable derived from the operating parameter (T).

5. A process according to Claim 3 or 4, **characterised in that** the quantity of reducing agent metered in as a hyperstoichiometric quantity (Rₘₐₓ) is established in dependence on the memory capacity, which is in particular temperature-dependent, of the denitration catalyst.

6. A process according to one of Claims 3 to 5, **characterised in that** a value assigned to the quantity of reducing agent metered in as a hyperstoichiometric quantity (Rₘₐₓ) is stored.

7. A process according to Claim 1, **characterised in that** the operating parameter is an exhaust gas temperature (T).

8. A process according to one of Claims 1 or 7, **characterised in that** the operating parameter is a mass flow of exhaust gas.

9. A process according to one of Claims 1, 7 or 8, **characterised in that** the operating parameter is a load on the internal combustion engine.

10. A process according to one of Claims 1, 7, 8 or 9, **characterised in that** the operating parameter is a speed of rotation of the internal combustion engine.

## Revendications

1. Procédé de conversion catalytique d'oxydes d'azote contenus dans les gaz d'échappement d'un moteur à combustion interne, dans lequel on ajoute au gaz d'échappement un agent (R) réducteur en amont considéré dans le sens du courant des gaz d'échappement d'un pot catalytique de dénitrification et de manière dosée en fonction d'une concentration d'oxyde d'azote, dans lequel
a) on mesure un paramètre (T) de fonctionnement du moteur à combustion interne, qui influe sur le dosage,
- une valeur (Tₘᵢₙ) limite étant associée à une grandeur dérivée du paramètre (T) de fonctionnement,
- un état de fonctionnement, défavorable au dosage, du moteur à combustion interne étant établi lorsque l'on passe en dessous ou au-dessus de cette valeur limite,
b) on augmente de manière réglée à l'avance la quantité de dosage de l'agent (R) réducteur lorsque l'on passe en dessous ou au-dessus de la valeur (Tₘᵢₙ) limite et
c) à un instant (t₅) ultérieur, on met fin à l'augmentation de la quantité de dosage,
on met fin à l'augmentation de la quantité de dosage pendant l'état de fonctionnement qui n'est pas favorable, **caractérisé en ce que**
on déduit la grandeur déduite du paramètre (T) de fonctionnement en différenciant le paramètre (T) de fonctionnement en fonction du temps ou en formant la différence de valeurs de mesure distantes dans le temps du paramètre (T) de fonctionnement.

2. Procédé suivant la revendication 1, **caractérisé en ce que** l'on augmente la quantité de dosage brièvement, notamment pendant 10 s environ.

3. Procédé suivant la revendication 1 ou 2, **caractérisé en ce que** l'on augmente la quantité de dosage préréglée à une quantité (Rₘₐₓ) de dosage hyperstoechiométrique.

4. Procédé suivant la revendication 3, **caractérisé en ce que** l'on règle la quantité (Rₘₐₓ) d'agent réducteur ajouté de manière hyperstoechiométrique en fonction de la mesure dans laquelle on passe au-dessus ou en dessous de la valeur (Tₘᵢₙ) limite de la grandeur dérivée du paramètre (T) de fonctionnement.

5. Procédé suivant la revendication 3 ou 4, **caractérisé en ce que** l'on règle la quantité (Rₘₐₓ) d'agent de réduction ajouté de manière hyperstoechiométrique en fonction de la capacité qui dépend notamment de la température du pot catalytique de dénitrification.

6. Procédé suivant l'une des revendications 3 à 5, **caractérisé en ce que** l'on mémorise une valeur associée à la quantité (Rₘₐₓ) d'agent de réduction ajouté de manière hyperstoechiométrique.

7. Procédé suivant la revendication 1, **caractérisé en ce que** le paramètre de fonctionnement comprend une température (T) des gaz d'échappement.

8. Procédé suivant l'une des revendications 1 ou 7, **caractérisé en ce que** le paramètre de fonctionnement comprend un courant massique des gaz d'échappement.

9. Procédé suivant l'une des revendications 1, 7 ou 8, **caractérisé en ce que** le paramètre de fonctionnement comprend une charge du moteur à combustion interne.

10. Procédé suivant l'une des revendications 1, 7, 8 ou 9, **caractérisé en ce que** le paramètre de fonctionnement comprend une vitesse de rotation du moteur à combustion interne.
